# EUROPEAN PATENT APPLICATION

(11) **EP 1 508 419 A1**
(43) Date of publication of application: **23.02.2005**
(21) Application number: 04103797.9
(22) Date of filing: 06.08.2004
(51) Int. Cl.: B29C 31/00, B29C 31/06

(54) **Device and method for handling containers in molding plants**

(30) Priority: 20.08.2003 IT UD20030170
(71) Applicant: PLANITEC Srl, 37047 SAN BONIFACIO (VR) (IT)
(72) Inventor: Randazzo, Filippo, 37047 San Bonifacio (VR) (IT)
(74) Representative: Petraz, Gilberto Luigi

(57) **Abstract**

Handling device (10) and relative handling method, for containers (18) in a molding plant (11) comprising a plurality of molds (12) loaded with plastic material in powder form, granular, mixed or suchlike, fed from a tank (13). The device (10) comprises a movement member (23, 26) which moves the container (18) from a first filling position, wherein it is arranged immediately below the tank (13), and a second unloading position arranged above the relative mold (12).

## Description

### FIELD OF THE INVENTION

The present invention concerns a handling device for containers in molding plants, of the type employed to make manufactured articles starting from plastic material mainly in powder form, granular or mixed, and the handling method which uses said device.

### BACKGROUND OF THE INVENTION

It is known that in molding plants for making manufactured articles made of plastic material starting from material mainly in powder form, granular or mixed, the steps of loading the molds are carried out manually in a same zone of the plant. To be more exact, during the loading step, the operators fill the mold manually with the material in powdered form, granular or mixed, contained in one or more sacks or containers, and they must also mix the materials, in the case of color composition.

However, this entails not only tiring the operator, but also the need to pay considerable attention in order to ensure the correct dosage, a considerable bulk and a great deal of dirtiness in the area surrounding the molds.

It is also known to use tanks, arranged above the molds and at a very great height, associated with unloading pipes through which the operator directs the material in powdered form, granular or mixed, inside the molds to be filled.

Known tanks normally have a valve positioned in correspondence with the outlet hole of the tank, so that for a long segment the material falls freely, thus acquiring a very high speed, with a consequent difficult and defective filling of the mold, especially when the latter is small and/or has a complex shape.

One purpose of the present invention is to achieve a device that facilitates the operator in dosing and loading a determinate quantity of plastic material in powdered form, granular or mixed, inside a mold.

Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe variants to the main inventive idea.

The handling device according to the present invention is used in a molding plant comprising a plurality of molds able to be loaded with plastic material in powdered form, granular or mixed, fed from at least a tank, and at least a container able to be filled from at least a tank with a quantity of plastic material in powdered form, granular or mixed, necessary for each of said molds.

The invention is applied particularly, but not exclusively, in molding plants of a rotational type wherein the molds, after filling, are moved automatically to be subjected to a plurality of treatments connected with the molding cycle.

The handling device according to the invention comprises a movement member able to move the container between a first filling position arranged immediately below said at least one tank, and a second loading position arranged above the relative mold.

According to a characteristic of the invention, the container comprises at the lower part a delivery pipe for the plastic material, advantageously of the at least partly flexible type, whose outlet mouth is arranged, in the loading position, at a limited distance from the relative mold. The delivery pipe comprises, in correspondence or proximity with the outlet mouth, valve means able to be driven on command by the operator which allow the selective passage of the plastic material.

In this way, the exact quantity of plastic material necessary for loading each of the molds can be unloaded precisely, in a first step, from the tank to the container, and then from the container to the mold after the container has been located by the movement member in the loading position.

The operator does not need to pay attention to the quantity unloaded, since it is enough to completely empty the container which already contains the correct quantity dosed for that mold. Moreover, thanks to the minimum distance provided between the valve means and the mold, the plastic material is delivered at a very low speed, thus reducing the risk of accidental spillages.

According to a variant, the container or a plurality of containers are mounted on a support, movable in rotating or linear manner, in order to be arranged sequentially below a plurality of tanks, each one containing material of a different type and/or color. In this way, the container can be filled automatically with at least one component, each one delivered by a relative tank. Moreover, when a first container is in the step of loading the material into the mold, a second container can be in the step of being filled from the relative tanks.

With the present invention it is therefore possible to unload, simply due to gravity, the exact quantity of material or plastic mixture in powder inside a mold in a simple manner, with very little fatigue for the operator, without waste of material and without causing dirt around the mold.

According to a variant, the movement member is associated with support means configured so as to substantially cancel the overall weight of the movement member, together with the suspended container, so as to render the filling action very easy for the operator.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a handling device according to the present invention;
- fig. 2 is a lateral view of the handling device in fig. 1 in a first operating position;
- fig. 3 shows the device in fig. 1 in a second operating position;
- fig. 4 is a view from IV of an enlarged detail of the handling device in fig. 1.

### DETAILED DESCRIPTION OF A PREFERENTIAL FORM OF EMBODIMENT

With reference to the attached figures, a handling device 10 according to the present invention, hereafter more simply handler, is employed in a molding plant 11 to make manufactured articles of plastic material.

In the following description we shall refer specifically to plastic material in powdered form, but it should be understood that the handling device 10 according to the present invention can also use granular plastic materials, powder-granular mix or suchlike.

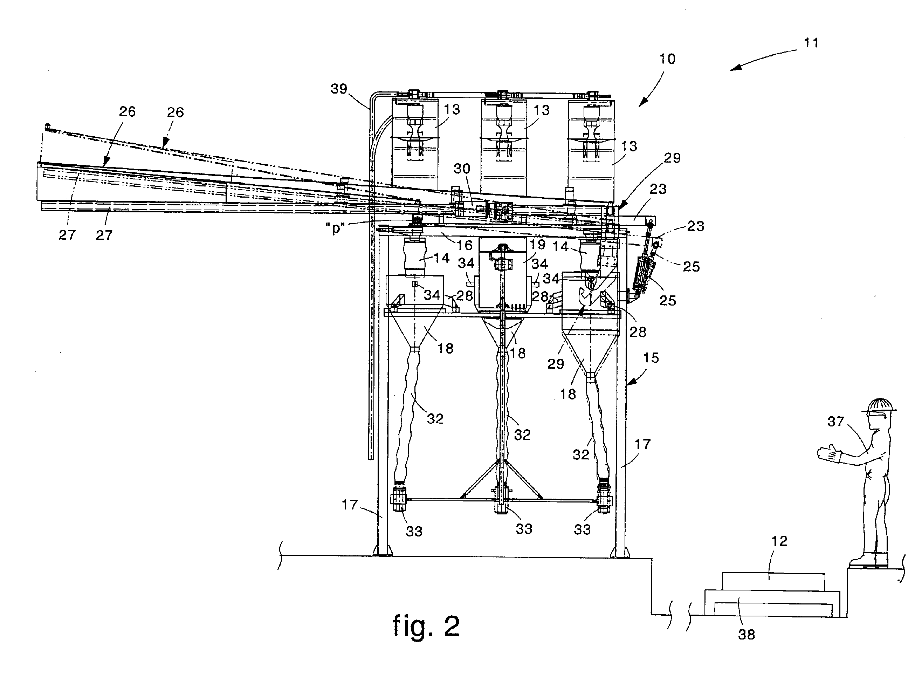

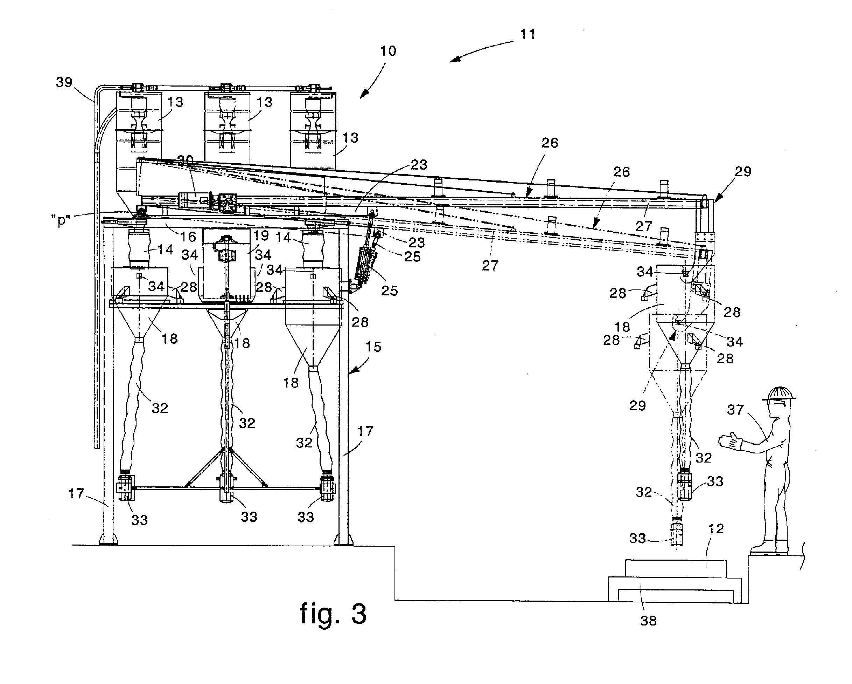

To be more exact, the molding plant 11 comprises a plurality of molds 12, of which only one is shown schematically in figs. 2 and 3, which are filled with plastic material in powdered form taken from one or more tanks 13, in this case five. Advantageously, but not restrictively, each of the tanks 13 is filled with a plastic powder of different color, or chemical composition, according to the types of manufactured articles to be made.

The molds 12 can be arranged on a movable table or platform 38, only shown schematically in the figures, to be taken and/or moved sequentially through the operating assemblies which perform the molding cycle.

Each tank 13 comprises at the lower part a release assembly 14 which allows the selective fall, due to gravity, of a desired and dosed quantity of plastic powder contained therein, into a corresponding container 18.

Each tank 13 can be associated with weighing means, such as load cells or suchlike, in order to control the exact quantity unloaded into the relative container 18. Alternatively, the release assembly 14 can comprise measuring means, such as flow detectors or suchlike, which ensure a precise control of the quantity of material unloaded. In a known manner, the tanks 13 are connected through a selection valve to a pneumatic tube 39 connected to a depression-generating pump, in order to be able to automatically perform filling and/or reintegration operations through pneumatic transport tubes connected to feed recipients, even remote.

The handler 10 according to the invention comprises a frame 15 defining an upper support plane 16 which supports the tanks 13 and four legs 17 resting on the floor.

Below the support plane 16 a first motor member 19 is assembled, which makes a substantially vertical transmission bar 20 rotate, on which two supports are mounted, an upper support 21 and a lower support 22, in order to temporarily support the containers 18 and make them rotate in carousel manner; the function and structure of the supports 21, 22 will be described in detail later.

Above the support plane 16 two tubular elements 23 are pivoted, at one end along a pivoting axis "p", and are able to be rotated between a first position substantially parallel to the support plane 16, and a second position angled with respect to the support plane 16, shown by dashes in figs. 2 and 3.

The movement between said two positions of the two tubular elements 23 occurs by means of corresponding linear actuators 25, pivoted both to the relative tubular element 23 and also to a leg 17 of the frame 15.

Above said tubular elements 23 a movement arm 26 is connected, substantially consisting of a pair of shaped elements 27, with a substantially C-shaped section, at one end of each of which a gripping hook 29 is attached (fig. 3). The linear actuators 25 also have the function, in use, of substantially canceling the weight of the whole group consisting of the movement arm 26, the tubular elements 23 and the suspended container 18, so that the handling by the operator during the loading of the material is simplified.

The connection between the shaped elements 27 and the tubular elements 23 occurs as shown in the detail in fig. 4, that is, by means of a second motor member 30 mounted on said tubular elements 23 and provided with two wheels 31 arranged inside the C-shaped section of the respective shaped elements 27.

Moreover, by making the wheels 31 rotate, the movement arm 26 is translated linearly between a first filling position, wherein the gripping hook 29 is arranged in a zone below the tanks 13 in cooperation with one of the tanks 18 (fig. 2), and a second loading position wherein the gripping hook 29 positions said container 18 above the relative mold 12 (fig. 3).

Each of the containers 18 is suitable to be filled with the exact quantity of plastic material in powdered form which is needed to load a relative mold, and is provided on its lateral surface with three brackets 28 which support the upper support 21, and with two prongs 34 which allow the gripping hook 29 to attach to the container 18. Moreover, each container 18 comprises at the lower part a flexible pipe 32 to deliver the powdered material contained therein. To be more exact, the flexible pipe 32 comprises, in correspondence with its outlet mouth, a closing valve 33 able to be selectively driven on command from the operator.

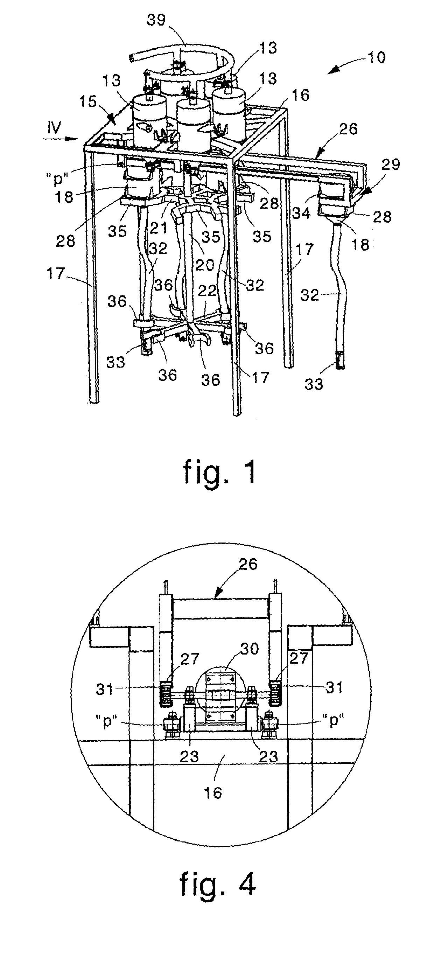

The upper support 21 is divided, as shown in fig. 1, into a plurality of sectors 35, in this case eight, in each of which a relative container 18 is arranged; the lower support 22 is provided with a plurality of gripping forks 36, each of which holds the ends of the flexible pipes 32 so as to prevent them from becoming entangled during rotation.

The handling device 10 as described heretofore functions as follows.

First of all, one of the containers 18 arranged on the upper support 21 is filled, by opening the release assembly 14, with an exact quantity of powdered material necessary to make the manufactured article. The powdered material is arranged partly in the body of the container 18 and partly in the relative flexible pipe 32, and stops in correspondence with the closing valve 33. The filling operation may involve the sequential arrangement, by rotating the supports 21 and 22, of the container 18 under one or more tanks 13, for example to achieve a composition of colors.

The filled container 18 is then located in a position where it can be picked up by the movement arm 26, which is driven to perform the pick-up; the tubular elements 23 are rotated into their second angled position, so that the gripping hook 29, as represented by the line of dashes in fig. 2, is arranged below the prongs 34 of the container 18.

By means of the linear actuators 25 the tubular elements 23 are taken to their first position, causing a rotation upwards of the movement arm 26. In this way the gripping hook 29 grips the prongs 34, lifting the container 18 from the upper support 21.

By driving the second motor member 30, the movement arm 26 takes the full container 18 into the loading position located above the mold 12.

During these steps, once the container 18 has been removed from its inactive position inside the upper support 21, the supports 21 and 22 can rotate in order to take a second container 18 into cooperation with the tanks 13 so as to reduce the times of the cycle.

At this point, the operator can grip the flexible pipe 32 "at zero weight", thanks to the compensation performed by the actuators 25 themselves, and move it vertically between the positions corresponding to the horizontal movement arm 26 and the inclined position of the arm 26 shown by the line of dashes in fig. 3.

In this position the closing valve 33 is located at a minimum distance from the relative mold 12; the operator 37 can act on the relative commands in order to unload the plastic material in powdered form from the container 18 to the mold with a very limited speed and great ease of maneuver.

The container 18 is completely emptied, since the quantity contained therein corresponds exactly to the quantity required to fill the mold 12, and therefore the loading operation does not require particular attention on the part of the operator 37.

When the emptying of the container 18 has been completed, the movement arm 26 repositions it on the upper support 21 and prepares to pick up and move a new container 18 already filled with the material.

According to the invention, on every mold 12 a univocal bar code is installed, able to be read by an optical reader, of a substantially known type and not shown in the drawings. The optical reader sends the data detected to an electronic processor which, according to the specific bar code, activates the release assemblies 14 in order to fill the containers 18 with the materials and quantities necessary for loading the mold 12 identified by the reading of the bar code.

It is clear, however, that modifications and/or additions of parts may be made to the handling device 10 as described heretofore, without departing from the field and scope of the present invention.

For example, the gripping hook 29 can be replaced by any gripping member whatsoever such as grippers or suchlike.

Instead of the tubular elements 23, the movement arm 26 can be provided with at least a linear actuator that moves the gripping hook 29.

According to another variant, the second motor member 30 could be replaced by a telescopic extension mechanism for the shaped elements 27.

The tanks 13 can also be remote from the handler 10, for example outside the shed where the molding plant is installed, and connected by means of suitable pipes to the support plane 16 of the frame 15.

It is also clear that, although the present invention has been described with reference to specific examples, a person of skill in the art shall certainly be able to achieve many other equivalent forms of handling device for containers in molding plants, all of which shall come within the field and scope of the present invention.

## Claims

1. Handling device for containers (18) in a molding plant (11) comprising a plurality of molds (12) able to be loaded with plastic material in powdered form, granular, mixed or suchlike, fed from at least a tank (13), **characterized in that** it comprises at least a movement member (23, 26) able to move said container (18) between a first filling position, wherein it is arranged immediately below said at least one tank (13), and a second unloading position arranged above the relative mold (12).

2. Device as in claim 1, **characterized in that** said container (18) comprises at the lower part a delivery pipe (32), including an outlet mouth associated with valve means (33) able to be arranged, in the loading position, at a minimum distance from the relative mold (12) to be filled.

3. Device as in claim 2, **characterized in that** said delivery pipe (32) is of the at least partly flexible type.

4. Device as in claim 2, **characterized in that** said valve means (33) are associated with command means able to be selectively driven by an operator (37).

5. Device as in claim 1, **characterized in that** said movement member comprises, pivoted to a frame (15), two tubular elements (23) associated with linear actuators (25) and supporting a movement arm element (26) able to pick up and move a relative container (18), said linear actuators (25) being configured so as to substantially cancel the weight of the combination of tubular elements (23), arm (26) and suspended container (18).

6. Device as in any claim hereinbefore, **characterized in that** said containers (18) are mounted on a movable support (21, 22) able to selectively position one container (18) at a time below one or more of said tanks (13) in order to perform the filling thereof.

7. Device as in claim 6, **characterized in that** each of said tanks (13) is associated with a release assembly (14) able to allow the selective delivery of a quantity of material when the relative container (18) has moved below said tank (13), said release assembly (14) being associated with means to detect the quantity of material delivered.

8. Device as in claim 7, **characterized in that** said means to detect the quantity delivered comprise load cells.

9. Device as in claim 8, **characterized in that** said movement arm element (26) comprises a pair of shaped elements (27) provided at one end with a gripping member (29), said shaped elements (27) being connected to said tubular elements (23) by means of a second motor member (30).

10. Device as in claim 9, **characterized in that** said second motor member (30) is attached to said tubular elements (23) and is able to drive rolling means (31) able to slide inside the C-shaped section of the respective shaped elements (27), in the step of displacing said movement arm element (26).

11. Handling method for containers (18) in a molding plant (11) comprising a plurality of molds (12) able to be loaded with plastic material in powdered form, granular, mixed or suchlike, fed from at least a tank (13), **characterized in that** in a first step a first container (18) is arranged below at least one tank (13), filled due to gravity with the exact quantity of material to be unloaded into a relative mold (12) and transferred by means of a movement member (23, 26) to a position above said relative mold (12), and in a second step valve means (33) associated with a delivery pipe (32) of said container (18) are driven in order to empty all the material contained in the container (18) inside the relative mold (12).

12. Method as in claim 11, **characterized in that** said container (18) is taken in sequence to cooperate with two or more tanks (13), each one comprising material in powdered form of a different and specific type and/or color, so as to achieve a mixture of material to be unloaded into a relative mold (12).

13. Method as in claim 11 or 12, **characterized in that** while a first container (18) is in the step of loading the material into a relative mold (12), a second container (18) is in the step of being filled with the material by means of the relative tanks (13).
